# EUROPEAN PATENT APPLICATION

(11) **EP 1 452 296 A1**
(43) Date of publication of application: **01.09.2004**
(21) Application number: 03405133.4
(22) Date of filing: 28.02.2003
(51) Int. Cl.: B29C 51/30, B29C 33/30

(54) **Mould and process for thermoforming trough-like objects**

(71) Applicant: Spiral Spas SA, 3178 Bösingen (CH); G.S.B. Global Sanitary Business Limited, Tortola (VG)
(72) Inventor: Doucet, Philippe, 3178 Bösingen (CH); Martoia, Michel, 3178 Bösingen (CH); Sellier, Jean-François, 3178 Bösingen (CH)
(74) Representative: Roshardt, Werner Alfred, Dipl.-Phys.

(57) **Abstract**

A mould for thermoforming trough-like objects is modular and comprises interchangeable basic mould elements (1, 3, 5) and interchangeable transition elements (2, 4), where every two adjacent basic mould elements (1, 3, 5) are connected by one of the transition elements (2, 4). Each transition element (2, 4) may comprise means (8) for guiding the adjacent basic mould elements (1, 3, 5) such that the transition between the elements is smooth, whereby the means are preferably arranged on surfaces of the transition element (2, 4) facing the adjacent basic mould elements (1, 3, 5). Furthermore, tightening means (9, 10, 11, 12) may be provided for tightening the adjacent basic mould elements (1, 3, 5) to each other. The mould is particularly suited for manufacturing a tub, preferably for a spa bath or whirlpool, where different basic mould elements correspond to seats allowing for different, e. g. reclined and upright seating positions.

## Description

### Technical Field

The invention relates to a mould for thermoforming trough-like objects as well as to a process for manufacture of trough-like objects.

### Background Art

Currently, trough-like objects, e. g. tubs for spa baths or whirlpools, are usually manufactured by thermoforming a thin sheet of a thermoformable material. The form of the trough-like object is predetermined by the form of a mould on which the layer is tightly set in a heated and thus thermoplastic condition. For each setting of the trough-like object, e. g. for each seat configuration or size of a spa bath, another mould has to be provided. Because the production of every mould is expensive the number of different troughs that are manufactured is usually kept as small as possible.

The patent US 5,338,501 (American Standard Inc) describes a method for manufacture of a bathtub by injection-moulding. The mould used for this purpose may be complemented by interchangeable deck inserts that allow for adapting the size and form of an extended deck. The form of the actual tub manufactured using a given mould is constant.

Similarly, the EP 0 759 353 (Hoesch Metall- & Kunststoffwerk) describes a mould for thermoforming bath-tubs with a trough section and edge sections of varying shape, whereby the mould has a core element for producing the trough section, and an interchangeable edge forming element for producing the varying edge sections that allow to install the bath-tub in different settings. The form and size of the tub can not be altered.

The JP 11 291 333 (Mitsubishi Rayon Co Ltd) discloses a manufacturing method for a bath-tub performing a moulding process, e. g. thermoforming, by attaching a detachable mould part for forming the shape of a part such as an armrest, a seat or an anti-skid element to a fundamental thermoforming mould such that the profile of the mould is modified. The general size and form of the tub is constant.

Recapitulating, it is stated that the known methods for moulding trough-like objects do not allow varying the size and configuration of a bath-tub manufactured by thermoforming. The known approaches lack flexibility and do not allow for changing the form and size of the trough itself.

### Summary of the invention

It is therefore the object of the invention to provide a process and a mould used in the process allowing for a wide choice in form and size of a trough-like object manufactured by thermoforming, thereby reducing the need of a large number of moulds and thus the expenses of manufacturing a large range of different trough-like objects, e. g. tubs for spa baths or whirlpools.

According to the invention, the solution consists in providing a mould that is modular and comprises interchangeable basic mould elements as well as interchangeable transition elements. Every two adjacent basic mould elements are connected by at least one of the transition elements.

Because of the modularity of the mould, allowing for interchanging a basic mould element by another, different basic mould element, a great flexibility is achieved. Already a small number of different basic mould elements that can be reused lead to a large number of possible combinations. By choosing a larger number of basic elements and/or larger basic elements an extended trough-like object can be formed. By reducing the number of basic elements and/or by choosing smaller basic elements smaller objects are obtained.

The configuration of the mould elements can be adapted to the purpose of the objects to be manufactured. A trough of a roughly rectangular form is best built up by successive rectangular modules constituting a cross-section of the trough, comprising two closing modules at the ends of the trough. A trough of a roughly circular form may be built up by modules in the form of "pieces of a pie", i. e. in a sector-like form.

Using rectangular basic mould elements, transition elements may be shaped such that they lead to a change of direction of the mould axis, thereby allowing for even a greater variety of forms of the trough-like objects.

Preferably, each transition element comprises a contour that smoothly connects to an adjacent basic mould element. That contour is part of the surface of the mould that determines the outcome of the thermoforming process. The transition elements thereby provide for a smooth transition between basic elements arranged adjacent to each other and lead to seamless and durable thermoformed products.

Preferably, a single transition element connects two adjacent basic mould elements. However, it is possible to arrange two or more transition elements between two basic mould elements. Thereby, on one hand the number of different transition elements to be provided may be reduced inasmuch as every transition element comprises on one of its sides a contour that matches the adjoining basic element and on the other side a predetermined contour which is identical throughout all the transition elements. Basic elements furnished by these matching transition elements therefore fit together in a seamless way. On the other hand, if transition elements leading to a change of direction are used, arranging more than one such element may lead to a larger change of direction.

Preferably, each transition element comprises means for guiding the adjacent basic mould elements such that the transition between the elements is smooth. These means are preferably arranged on surfaces of the transition elements facing the adjacent basic mould elements.

Such guiding means care for proper alignment of adjacent transition and basic mould elements and improve the smoothness of the transition between the elements. A seamless transition is crucial because otherwise the resulting trough-like object shows seams which are aesthetically unpleasant, harm the durability of the object and may lead to injuries e. g. in the case where the trough-like object is used as a tub.

The guiding means may be constituted by mortises or bolts in one element co-operating with corresponding tenons or holes in the adjacent element. Particularly advantageous are bolts and respective holes having a conical form. They allow for easy assembly without sacrificing precision. Alternatively the guiding means may be arranged at the outer side of the mould elements and be constituted e. g. by guiding rails.

Advantageously each transition element comprises means for tightening the adjacent basic mould elements to each other.

Tightening adjacent elements to each other further improves the smoothness of transitions between the elements. Furthermore it is necessary to hold together the whole modular mould in order to perform the thermoforming process. The means for tightening may be screws co-operating with respective threaded holes, clamps arranged on the side faces of the mould elements or bolts and nuts.

Alternatively the mould finally assembled may be tightened by a means encompassing the whole mould, e. g. by a rotary frame that can be tightened or by a rack firmly holding the mould elements.

For mould elements arranged along a straight line, the means for tightening preferably comprise at least one hole perpendicular to a surface of the transition element facing an adjacent element. Respective holes are comprised by all the basic mould elements such that if the elements are combined the holes of the transition elements and the holes of the basic mould elements are arranged such that a continuous hole from one of the closing basic elements of the mould to the other closing basic element is formed. This allows for tightening the mould using that hole, preferably by using a screw. The screw is inducted through the opening of the hole in one of the closing elements and co-operates with a thread arranged at least in a part of the hole in the other closing element. Thereby the whole mould is tightened along the hole.

Preferably multiple holes are arranged along the mould such that the tightening can be effected evenly throughout the cross section of the mould. Preferably the screw used to tighten the mould features a thread only near its tip such that it can be directly inducted through most of the hole until the tip reaches the thread of the opposing closing element. On its other end the screw preferably comprises a washer of a large diameter to firm up the screw on the face of the closing element.

The mould according to the invention is particularly suitable for the manufacture of tubs, preferably for a spa bath or whirlpool. In this case different basic mould elements correspond to seats allowing for different seating positions.

By combining different basic mould elements a large variety of spa baths with different sizes and seating configurations can be manufactured without having to provide a specially-designed mould for each configuration. The mould according to the invention furthermore enables the flexible production of custom-made spas having a configuration at buyer's option. Apart from different seating positions the basic mould elements may correspond to different seating configurations. For example closing mould elements arranged at one of the ends of the tub may correspond to a number of seats arranged in a semi-circle whereas other closing mould elements may correspond to a single seat or two seats arranged oppositely.

Preferably in the thermoforming step a layer of thermoformable material, preferably a layer of Poly(methyl methacrylate) (PMMA) with a thickness of 3.2 - 3.4 mm, is formed using the mould. Thermoformable materials comprise in addition ABS resin or other composite polymeric materials. Furthermore, sheets for thermoforming may be constituted by two, three or more layers of different suitable materials, preferably having a top layer of PMMA.

For stabilising the tub, the thermoformed mould will be usually reinforced, e. g. coated by glass fibre. Furthermore, jets for distributing air or water into the spa bath will be mounted, e. g. through holes drilled at all the positions where a jet should be provided.

Preferably basic mould elements for at least two kinds of seating positions are provided. An elongated seat allows for a very comfortable reclined position whereas a more upright seat allows for a larger number of seating positions in a spa bath of a given size.

Preferably a transition element connecting smoothly a basic mould element corresponding to at least one elongated seat to another basic mould element corresponding to at least one upright seat is provided. Thereby the combination of elongated and upright seats in the same spa bath is enabled and the number of possible configurations is further enhanced.

For linearly arranged modules the basic mould elements may be designed to have an axially symmetric form such that if axially asymmetric transition elements are flipped they are applicable for another sort of transition. This reduces the number of different transition elements required.

A process for manufacture of trough-like objects, in particular tubs for spa baths or whirlpools, comprises the following steps:
a) selecting at least two basic mould elements;
b) arranging the at least two basic elements along a straight line;
c) determining transition elements matching each two adjacent basic mould elements;
d) arranging the matching transition elements in between the basic mould elements;
e) attaching every element to its adjacent elements such that a continuous mould is formed;
f) thermoforming the trough-like object using the mould.

After thermoforming the trough-like object, it may be removed e. g. by blowing compressed air through respective ducts provided in the mould into the space between the mould and the formed object.

Other advantageous embodiments and combinations of features come out from the detailed description below and the totality of the claims.

### Brief description of the drawings

The drawings used to explain the embodiments show:
- Fig. 1: A schematic representation of a modular mould according to the invention prior to assembly;
- Fig. 2: a schematic representation of a closing basic mould element corresponding to a single elongated seat;
- Fig. 3: a schematic representation of a central basic mould element corresponding to a single elongated seat;
- Fig. 4: a schematic representation of a closing basic mould element corresponding to a double upright seat;
- Fig. 5: a schematic representation of a central basic mould element corresponding to a double upright seat;
- Fig. 6: a schematic representation of a first closing basic mould element corresponding to a semi-circle of upright seats;
- Fig. 7: a schematic representation of a second closing basic mould element corresponding to a semi-circle of upright seats;
- Fig. 8: a schematic representation of a third closing basic mould element corresponding to a semi-circle of upright seats;
- Fig. 9-11: schematic diagrams of the cross-section of differently configured modular moulds along their axes;
- Fig. 12: schematic diagrams of the arrangement of basic mould elements and transition elements for differently sized modular moulds;
- Fig. 13: schematic diagrams of possible combinations of two or three basic mould elements;
- Fig. 14: schematic diagram of a mould including transition elements leading to a change of direction;
- Fig. 15: schematic diagram of a circular mould built up by modules in a sector-like form.

In the figures, the same components are given the same reference symbols.

### Preferred Embodiments

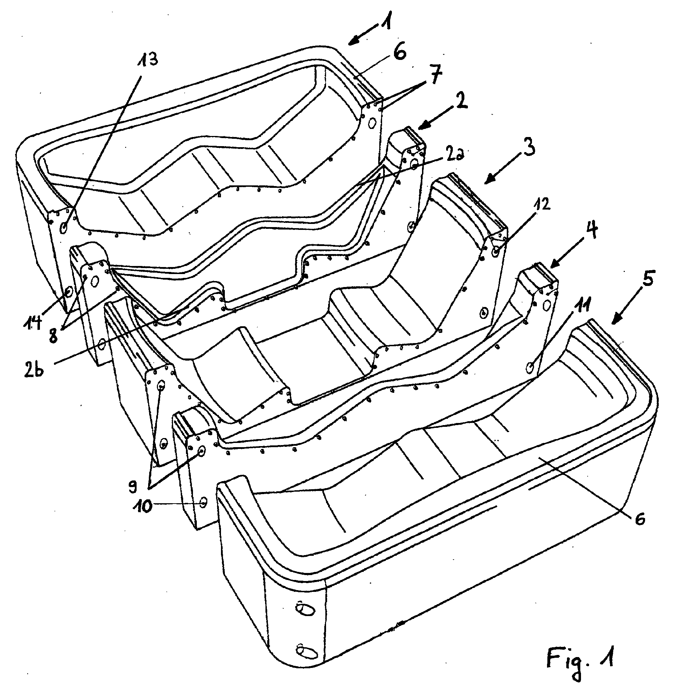

Figure 1 is a schematic representation of a modular mould according to the invention prior to assembly. The mould is used to thermoform tubs for spa baths and is built by five linearly arranged elements, starting with a closing basic mould element 1 corresponding to a single elongated seat. The adjoining element is a transition element 2 going from a single elongated seat to a double upright seat. The following element is a central basic mould element 3 with a double upright seat. The transition to the final closing basic mould element 5 corresponding again to a single elongated seat is made by another respective transition element 4. The form of the upper side of the mould determines the form of the tub manufactured by thermoforming.

All the basic mould elements 1, 3, 5 are symmetric, therefore the transition elements 2, 4 have an identical form and are just turned relative to each other by 180° about a vertical axis. The closing basic elements 1, 5 have as well an identical form and comprise a circumferential top elevation 6 on three of their sides corresponding to the rim of the tub that will be formed using the mould. The fourth side, perpendicular to the axis of the mould does not show the elevation and constitutes the connection to the adjoining mould element. Inside the elevation 6, the cross section of the closing elements 1, 5 is substantially constant along the axis of the modular mould and corresponds to the seating positions to be built in the tub.

The adjoining transition elements 2, 4 show exactly the same cross section on their side turned towards the closing elements 1, 5 respectively. For example, transition element 2 comprises a first contour 2a corresponding to the adjacent basic mould element corresponding to the elongated seat and a second contour 2b corresponding to the central basic mould element corresponding to the double upright seat. This leads to a soft, seamless transition from the basic element 1 to the transition element 2 as well as from the basic element 5 to the transition element 4. Along the axis of the mould, the cross section of the transition elements 2, 4 changes such that on their sides turned to the central basic mould element 3 the transition elements 2, 4 show a cross section identical to the one of the central basic mould element 3. This again leads to a seamless transition between transition elements 2, 4 and the central element 3. The cross section of the central element is constant throughout its extension along the axis of the mould.

In the connecting surfaces, the basic mould elements comprise evenly-spaced holes 7 along their upper surface, the transition elements show respective bolts 8 matching these holes. The holes 7 and bolts 8 lead to an exact match of adjoining elements in the horizontal as well as in the vertical direction. Furthermore, they inhibit combining adjoining mould elements that do not fit (e. g. an elongated seat basic element to a transition element upright-upright).

Instead of or additional to bolts and respective holes, other matching elements may be disposed such as e. g. crosswise risings and respective indentations that provide for guiding the adjacent elements at the same time in the vertical as well as in the horizontal direction.

Furthermore all the mould elements except the closing elements are pierced by four ways 9, 10, 11, 12 parallel to the axis of the modular mould and arranged on the upper left and right hand part of the elements, near the elevation, as well as on the lower left and right hand part of the elements, near the base. The closing elements 1, 5 are pierced by only two ways on their left side (viewed from outside the mould along its axis). On the other side, the closing elements 1, 5 feature appropriate threaded holes 13, 14. To tighten the modular mould and to push all the mould elements together such that a seamless changeover between the elements is established, a long screw is pushed through almost the entire length of the mould, until the thread is reached, and subsequently fastened. The head of the screw is large enough to constitute a support against the outside of the pierced closing element. Alternatively, respective washers may be used between the screw head and the outside of the closing element.

Alternatively all the four ways may pierce as well the closing elements, such that a threaded bar may be inducted through the ways and subsequently tightened on both sides, outside of the mould. Another alternative is employing tightening elements disposed on the outer side walls of the mould elements that may be clamped or bolted together.

Figure 2 is a schematic representation of a closing basic mould element corresponding to a single elongated seat. It comprises a circumferential elevation on three of its sides corresponding to the rim of the tub. In contrast to Figure 1, the element displayed is non-symmetric and shows a cross section perpendicular to the axis of the mould whose upper profile corresponds to an elongated seating position with stretched legs.

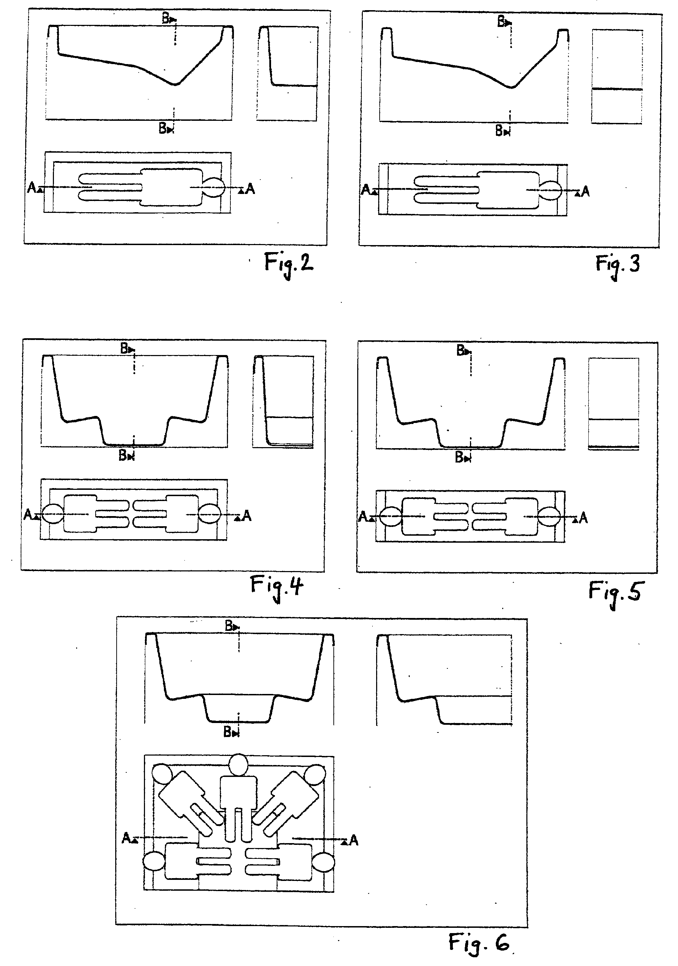

Figure 3 is a schematic representation of a central basic mould element corresponding to a single elongated seat. The profile of the element corresponds to the profile of the respective closing element, however the elevation is formed only on the two sides parallel to the axis of the mould. The other two sides constitute the connections to adjoining mould elements.

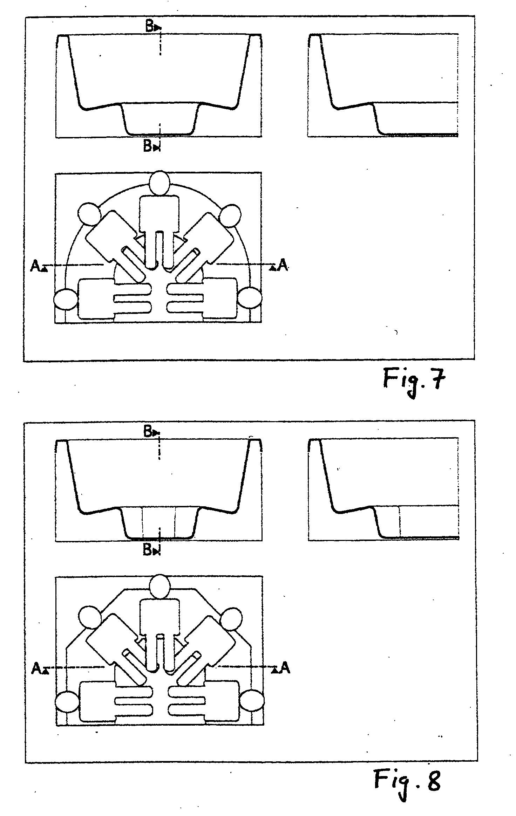

Figure 4 is a schematic representation of a closing basic mould element corresponding to a double upright seat. Different from the single elongated seat element displayed in Figures 2, 3, this element is symmetric with respect to the axis of the mould. Two seating positions opposing each other are provided, the width corresponds to the respective closing element corresponding to an elongated seat.

Figure 5 is a schematic representation of a central basic mould element corresponding to a double upright seat. Again, its difference to the closing element is the missing elevation on one of the sides perpendicular to the mould axis.

Figure 6 is a schematic representation of a first closing basic mould element corresponding to a semi-circle of upright seats. This closing element has a larger width than a single elongated seat or double upright seat closing element. It provides for five upright seat positions arranged in a semi-circle. The bench is U-shaped and the profile of the connection side of the element is identical to the profile of a double upright seat element.

The closing elements are preferable for situating ladders or stairs for users entering the spa bath as well as for disposing devices for treating the water. The ladder, the stairs or the device may be arranged such that they replace one or two of the five seat positions. As a matter of course, ladders, stairs or other devices may as well be disposed on other basic mould elements.

Figure 7 is a schematic representation of a second closing basic mould element corresponding to a semi-circle of upright seats. It is very similar to the first element, however the form of the bench is semi-circular.

Figure 8 is a schematic representation of a third closing basic mould element corresponding to a semi-circle of upright seats. This is another alternative where the bench is formed like a half-octagon.

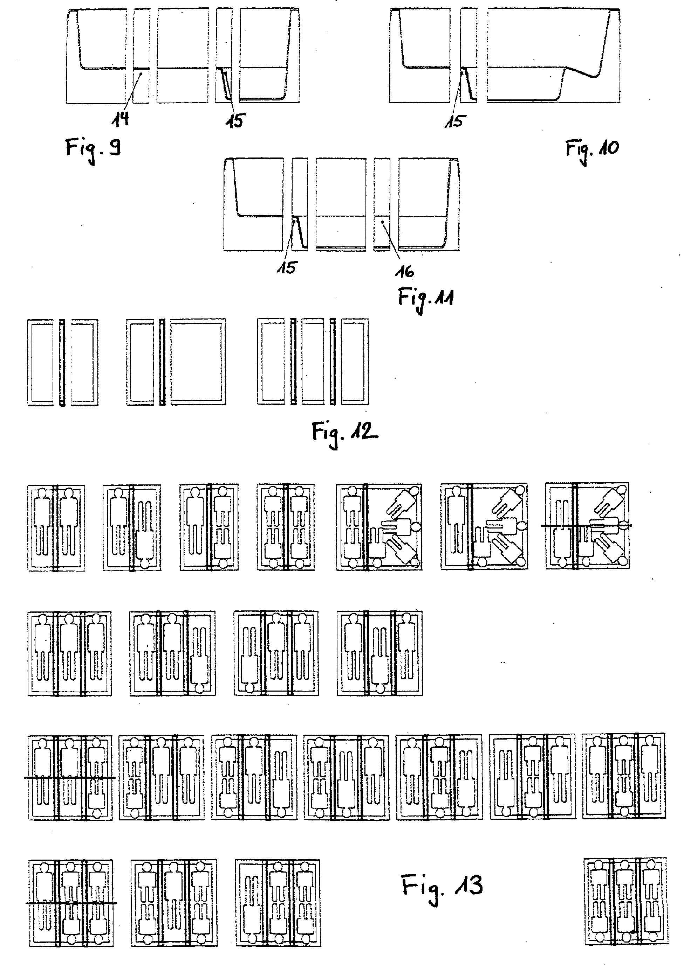

Figures 9-11 are schematic diagrams of the cross-section of differently configured modular moulds along their axes. Figure 9 shows a mould for four people with two elongated and two upright seating positions. It comprises an elongated closing mould connected to an elongated central mould by a transition elongated-elongated 14. The central mould is connected to a closing mould with two upright seating positions by a transition elongated-upright 15. Figure 10 shows a mould for six people with five upright and one elongated position. The upright seats are provided by a semicircular closing element. Connected to this via the transition elongated-upright 15 is a closing mould corresponding to one elongated seat. Figure 11 depicts a mould for five people, providing one elongated and four upright seats. It is constituted by an elongated closing element, an upright central element and an upright closing element. To connect the elongated closing element to the upright central element, again a transition elongated-upright 15 is required. The second connection is provided by a transition upright-upright 16.

For symmetric mould elements providing single elongated or double upright seats three different transition elements 14, 15, 16 suffice to form all the connections between the basic elements.

Figure 12 is a schematic diagram of the arrangement of basic mould elements and transition elements for differently sized modular moulds. Every mould requires exactly two closing elements and an arbitrary number of central mould elements (including none). The number of transition elements will be the number of central elements plus one. Having a set of different mould elements, the width of the tubs that can be manufactured is fixed, the length of the tubs however in principle is unlimited.

Figure 13 is a schematic diagram of possible combinations of two or three basic mould elements: twenty-two sample configurations are displayed. All these (and more) can be built by a set of two each of the following (symmetric) mould elements: closing elongated, closing upright, transition elongated-elongated, transition elongated-upright, transition upright-upright and one each of the following mould elements: closing upright semi-circle, central elongated, central upright.

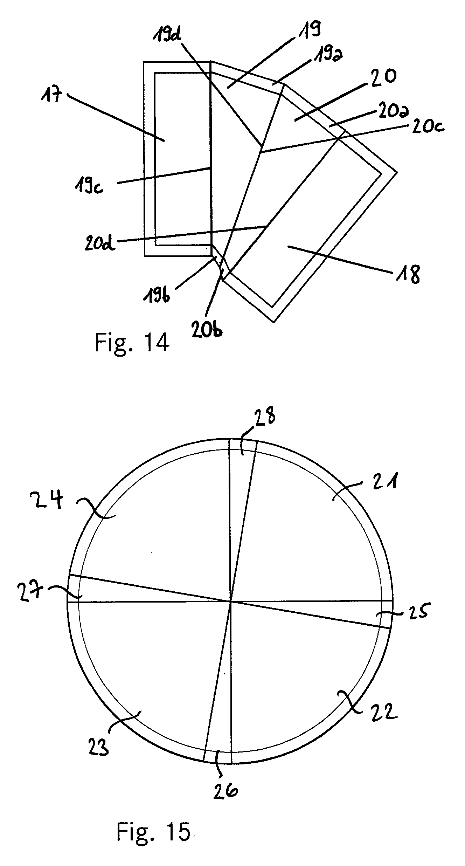

Figure 14 is a schematic diagram of a mould including transition elements leading to a change of direction. Two rectangular closing basic mould elements 17, 18 are connected by two transition elements 19, 20. The two sides 19a, 19b; 20a, 20b of the transition elements showing a top elevation corresponding to the rim of the tub have different lengths. This leads to a change of direction by a certain angle. However, the width of the connecting surfaces 19c, 19d, 20c, 20d is always the same in order that the transition elements and the basic mould elements fit together. The longer sides 19, 20 showing a top elevation are parallel to one of the connecting surfaces 19d, 20d. To achieve this, the sides 19a, 19b; 20a, 20b are not parallel. In the arrangement shown with the longer sides 19a, 20a and the shorter sides 19b, 20b following each other, the changes of direction of the two elements 19, 20 add together.

Alternatively, the transition elements may be designed to have the shape of an isosceles trapezoid.

In the embodiment discussed the successive mould elements are arranged along a straight line constituting the axis of the tub. This arrangement is useful, even if a circular form of the tub is desired. However, in this case the invention may be carried out employing an alternative configuration using sector-like modules arranged like the pieces of a pie. Figure 15 shows a schematic diagram of a circular mould built up by modules in a sector-like form.

The basic mould elements 21, 22, 23, 24 have the form of a sector of a circle. They are connected by transition elements 25, 26, 27, 28 having a similar form with a smaller angle. All the elements 21-28 comprise a top elevation along their outer radius, corresponding to the rim of a spa bath. The sector-like basic mould elements 21, 22, 23, 24 correspond to certain kinds of seats. The transition elements 25, 26, 27, 28 again comprise contours that smoothly connect to the adjacent basic mould element. In the centre of the circle, all the elements show the same elevation such that a seamless connection is assured as well in this region of the mould. The circular mould does not comprise closing elements, thereby the number of elements needed may be reduced.

To further improve the transitions between adjacent basic mould elements the central region of the mould may be built by a circular mould element having a diameter that is much smaller than the one of the circular mould. In this case the basic mould elements lack a certain part corresponding to the radius of the circular mould element, therefore they have the shape of a circular ring sector, but adjacent to the circular mould element they show an elevation predetermined for all the mould elements.

The tightening of the assembled circular mould is preferably accomplished by a ring that embraces the mould and which can be tightened.

In summary, it is to be noted that the invention provides a process and a mould used in the process allowing for a wide choice in form and size of a trough-like object manufactured by thermoforming, thereby reducing the need of a large number of moulds and thus the expenses of manufacturing a large range of different trough-like objects, e. g. tubs for spa baths or whirlpools.

## Claims

1. Mould for thermoforming trough-like objects, **characterized in that** the mould is modular and comprises interchangeable basic mould elements (1, 3, 5) and interchangeable transition elements (2, 4), where every two adjacent basic mould elements (1, 3, 5) are connected by at least one of the transition elements (2, 4).

2. Mould according to claim 1, **characterized in that** each transition element (2, 4) comprises a contour that smoothly connects to an adjacent basic mould element (1, 3, 5).

3. Mould according to claim 1 or 2, **characterized in that** each transition element (2, 4) comprises means (8) for guiding the adjacent basic mould elements (1, 3, 5) such that the transition between the elements is smooth, whereby the means are preferably arranged on surfaces of the transition element facing the adjacent basic mould elements.

4. Mould according to one of claims 1 to 3, **characterized in that** each transition element (2, 4) comprises means (9, 10, 11, 12) for tightening the adjacent basic mould elements (1, 3, 5) to each other.

5. Mould according to claim 4, **characterized in that** the means for tightening comprise at least one hole (9, 10, 11, 12) perpendicular to a surface of the transition element (2, 4) facing an adjacent element and that respective holes (9, 10, 11, 12) are comprised by all the basic mould elements (1, 3, 5) such that if the elements are combined the holes of the transition elements and the holes of the basic mould elements are arranged such that a continuous hole from one closing basic element of the mould to a second closing basic element is formed, allowing for tightening the mould preferably by using a screw.

6. Mould according to one of claims 1 to 5, **characterized in that** the trough-like object is a tub, preferably for a spa bath or whirlpool, and that different basic mould elements correspond to seats allowing for different seating positions.

7. Mould according to claim 6, **characterized by** a basic mould element (1, 5) of a first kind corresponding to at least one elongated seat and a basic mould element (3) of a second kind corresponding to at least one upright seat.

8. Mould according to claim 7, **characterized by** a transition element (2, 4) connecting smoothly the basic mould element (1, 5) of the first kind corresponding to at least one elongated seat to the basic mould element (3) of the second kind corresponding to at least one upright seat.

9. Process for manufacture of trough-like objects, in particular tubs for spa baths or whirlpools, comprising the steps of:
a) selecting at least two basic mould elements (1, 3, 5);
b) arranging the at least two basic elements (1, 3, 5) along a straight line;
c) determining transition elements (2, 4) matching each two adjacent basic mould elements;
d) arranging the matching transition elements (2, 4) in between the basic mould elements (1, 3, 5);
e) attaching every element to its adjacent elements such that a continuous mould is formed;
f) thermoforming the trough-like object using the mould.

10. Process according to claim 9, **characterized in that** in the selection step at least a first kind of basic mould element and a second kind of basic mould element different from the first kind of basic mould element can be selected.
